# EUROPEAN PATENT APPLICATION

(11) **EP 3 770 523 A1**
(43) Date of publication of application: **27.01.2021**
(21) Application number: 18910325.2
(22) Date of filing: 23.03.2018
(51) Int. Cl.: F24F 11/89, F24F 11/46, F24F 11/64

(54) **AIR-CONDITIONING DEVICE**

(71) Applicant: Mitsubishi Electric Corporation, Tokyo 100-8310 (JP)
(72) Inventor: KUBOTA, Tsuyoshi, Tokyo 1008310 (JP)
(74) Representative: Pfenning, Meinig & Partner mbB
(86) International application number: PCT/JP2018/011853
(87) International publication number: WO 2019/180952

(57) **Abstract**

An air-conditioning apparatus includes a heat source unit generating heat to be transferred by a heat medium, a plurality of load-side units through which the heat medium flows, and a controller proportionally dividing a common power consumption consumed by the heat source unit. Each of the plurality of load-side units includes a flow control valve controlling a flow rate of the heat medium, an inflow pressure sensor detecting an inlet pressure of the heat medium at the flow control valve, and an outflow pressure sensor detecting an outlet pressure of the heat medium at the flow control valve. The controller includes a capacity calculation unit calculating a usage capacity for each of the plurality of load-side units, on the basis of a flow rate of the heat medium calculated on the basis of a pressure difference between the inlet pressure and the outlet pressure and a temperature difference of the heat medium, and a proportional division unit proportionally dividing the common power consumption among the plurality of load-side units, on the basis of the usage capacity of each of the plurality of load-side units calculated by the capacity calculation unit.

## Description

### Technical Field

The present disclosure relates to an air-conditioning apparatus including a refrigerant circuit and a heat medium circuit that transfers heat generated by the refrigerant circuit.

### Background Art

There are air-conditioning apparatuses, such as variable refrigerant flow systems for buildings, that include a heat source unit disposed outside a building as an outdoor unit, and an indoor unit disposed in an indoor space of the building. In such an air-conditioning apparatus, refrigerant circulating in a refrigerant circuit transfers heat to or receives heat from air supplied to a heat exchanger of the indoor unit, thereby heating or cooling the air. The heated or cooled air is sent to an air-conditioned space so that the air-conditioned space is heated or cooled. A known air-conditioning apparatus of a double loop system uses refrigerant in a primary loop, and water or brine as a heat medium in a secondary loop, and is configured in such a manner that the secondary loop conditions the air in the space where people are present (see, for example, Patent Literature 1).

In a building equipped with a variable refrigerant flow system for a building, a plurality of indoor units are installed for a plurality of rooms. Therefore, as for the amount of power used by a shared heat source unit, an electricity expense for each room needs to be calculated in accordance with the amount of power used in each room. An exemplary method for proportionally dividing the power consumption of a heat source unit among a plurality of rooms to calculate the electricity expense for each room is disclosed in Patent Literature 2. Patent Literature 2 discloses an air-conditioning apparatus of a double loop system that calculates the flow rate of a heat medium in each indoor unit on the basis of the opening degree of a flow control valve of each indoor unit and the rotation frequency of a pump, and calculates the usage capacity of each indoor unit on the basis of the calculated flow rate to proportionally divide the power consumption.

### Citation List

### Patent Literature

Patent Literature 1: Japanese Unexamined Patent Application Publication No. 2000-227242
Patent Literature 2: Japanese Patent No. 5710021

### Summary of Invention

### Technical Problem

Usually, a building has a plurality of indoor spaces, and hence an air-conditioning apparatus has a plurality of indoor units for the plurality of indoor spaces. The larger a building is, the longer a refrigerant pipe connecting an outdoor unit and each indoor unit tends to be. In some cases, the length of a refrigerant pipe is as long as 100 m, for example. If a refrigerant pipe connecting an outdoor unit and an indoor unit is long, the amount of refrigerant filled in a refrigerant circuit is increased in accordance with the length.

The air-conditioning apparatus disclosed in Patent Literature 2 includes a pump configured to supply a heat medium to the plurality of indoor units. The pump is provided in a relay unit disposed between the heat source unit and the plurality of indoor units. Therefore, if a plurality of pipes connecting the relay unit and the plurality of indoor units have different lengths from each other, the difference in length between the pipes greatly affects the calculation of the flow rate. This reduces the accuracy of calculating the flow rate of each indoor unit, so that the power consumption cannot be accurately proportionally divided among the plurality of indoor units.

The present disclosure has been made to solve the above problem, and an object of the present disclosure is to provide an air-conditioning apparatus that accurately proportionally divides the power consumption of a heat source unit among a plurality of load-side units.

### Solution to Problem

An air-conditioning apparatus according to an embodiment of the present disclosure includes a heat source unit configured to generate heat to be transferred by a heat medium, a plurality of load-side units through which the heat medium flows, and a controller configured to proportionally divide a common power consumption consumed by the heat source unit. Each of the plurality of load-side units includes a flow control valve configured to control a flow rate of the heat medium, an inflow pressure sensor disposed to an inlet port of the flow control valve, and configured to detect an inlet pressure of the heat medium, and an outflow pressure sensor disposed to an outlet port of the flow control valve, and configured to detect an outlet pressure of the heat medium. The controller includes a capacity calculation unit configured to calculate a usage capacity for each of the plurality of load-side units, on the basis of a flow rate of the heat medium and a temperature difference of the heat medium, the flow rate of the heat medium being calculated on the basis of a pressure difference between the inlet pressure detected by the inflow pressure sensor and the outlet pressure detected by the outflow pressure sensor, and a proportional division unit configured to proportionally divide the common power consumption among the plurality of load-side units, on the basis of the usage capacity of each of the plurality of load-side units calculated by the capacity calculation unit.

### Advantageous Effects of Invention

According to an embodiment of the present disclosure, as the flow rate is calculated on the basis of the pressure difference between the pressure of the heat medium at an inlet of the flow control valve and the pressure of the heat medium at an outlet of the flow control valve, the calculation accuracy of the flow rate of the heat medium flowing through each load-side unit is improved. This makes it possible to more accurately proportionally divide the common power consumption on the basis of the usage capacity of each load-side unit.

### Brief Description of Drawings

[Fig. 1] Fig. 1 illustrates an exemplary configuration of an air-conditioning apparatus according to Embodiment 1 of the present disclosure.
[Fig. 2] Fig. 2 illustrates an exemplary configuration of a load-side controller illustrated in Fig. 1.
[Fig. 3] Fig. 3 illustrates an exemplary configuration of a heat source unit illustrated in Fig. 1.
[Fig. 4] Fig. 4 is a functional block diagram illustrating an exemplary configuration of a controller illustrated in Fig. 3.
[Fig. 5] Fig. 5 is a flowchart illustrating the procedure of power consumption calculation performed by the controller illustrated in Fig. 4.
[Fig. 6] Fig. 6 illustrates another exemplary configuration of an air-conditioning apparatus according to Embodiment 1 of the present disclosure.

### Description of Embodiments

### Embodiment 1

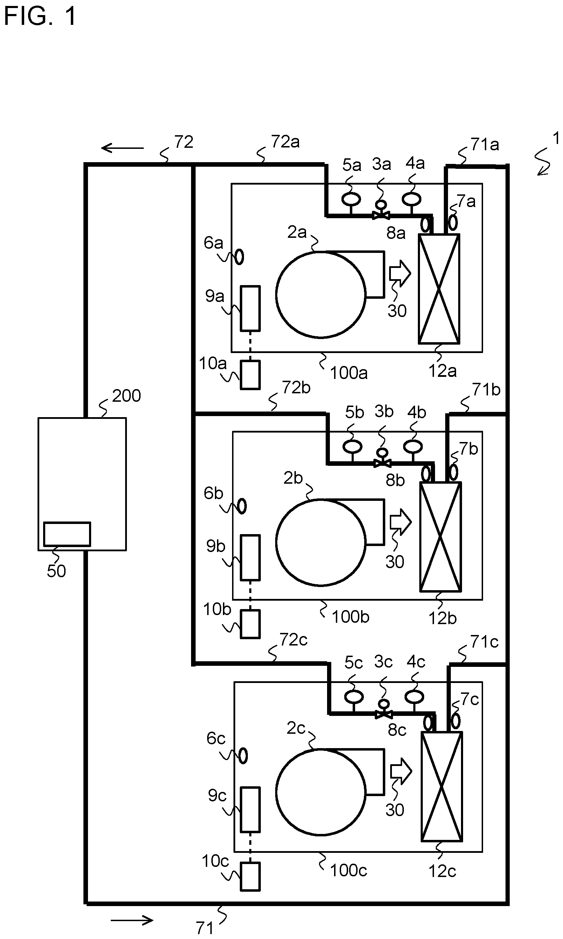

The configuration of an air-conditioning apparatus according to Embodiment 1 will be described. Fig. 1 illustrates an exemplary configuration of the air-conditioning apparatus according to Embodiment 1 of the present disclosure. An air-conditioning apparatus 1 includes a heat source unit 200 configured to generate heat to be transferred by a heat medium, and a plurality of load-side units 100a to 100c each configured to condition the air in an air-conditioned space by using a heat medium circulating between the heat source unit 200 and the load-side unit as a heat source. The heat medium is, for example, water and brine.

The plurality of load-side units 100a to 100c are connected in parallel to each other. Each load-side unit is connected in series to the heat source unit 200 via connection pipes 71 and 72. The plurality of load-side units 100a to 100c are installed, for example, in a plurality of rooms in a building. The load-side units are disposed in different rooms from each other.

The heat source unit 200 is connected to the single connection pipe 71, and the connection pipe 71 branches out into three connection pipes 71a to 71b. The connection pipe 71a is connected to the load-side unit 100a. The connection pipe 71b is connected to the load-side unit 100b. The connection pipe 71c is connected to the load-side unit 100c. Whereas, connection pipes 72a to 72c merge into the connection pipe 72 to be connected to the heat source unit 200. The connection pipe 72a is connected to the load-side unit 100a. The connection pipe 72b is connected to the load-side unit 100b. The connection pipe 72c is connected to the load-side unit 100c.

The configuration of the load-side units 100a to 100c will be described with reference to Fig. 1. The load-side units 100a to 100c have the same configuration. Therefore, the following only describes the configuration of the load-side unit 100a, and a detailed description of the load-side units 100b and 100c will be omitted.

The load-side units 100a to 100c are, for example, fan coil units. The load-side unit 100a includes, for example, a heat exchanger 12a, an air-sending device 2a, a flow control valve 3a, and a load-side controller 9a. A remote controller 10a is connected to the load-side controller 9a. The load-side unit 100a is provided with a room temperature sensor 6a that detects a room temperature Tar. The remote controller 10a is an interface for the user of the load-side unit 100a to input instructions for operating the load-side unit 100a, such as setting an operation mode, indoor temperature, and air flow rate.

The heat exchanger 12a exchanges heat between a heat medium and air 30. The heat exchanger 12a is, for example, a fin-and-tube heat exchanger, a microchannel heat exchanger, a shell-and-tube heat exchanger, a heat pipe heat exchanger, a double pipe heat exchanger, or a plate heat exchanger. The air-sending device 2a supplies the air of the air-conditioned space to the heat exchanger 12a. The air-sending device 2a includes a fan such as a cross flow fan and a sirocco fan, for example. The flow control valve 3a controls the flow rate of the heat medium flowing into the load-side unit 100a through the connection pipe 71a. The flow control valve 3a is disposed at a heat medium outlet of the heat exchanger 12a, and controls the opening degree in accordance with an instruction from the load-side controller 9a.

An inflow pressure sensor 4a is disposed to a heat medium inlet port of the flow control valve 3a. The inflow pressure sensor 4a detects an inlet pressure Pain of the heat medium at the inlet port of the flow control valve 3a. An outflow pressure sensor 5a is disposed to a heat medium outlet port of the flow control valve 3a. The outflow pressure sensor 5a detects an outlet pressure Paout of the heat medium at the outlet port of the flow control valve 3a. An inflow temperature sensor 7a is disposed at a heat medium inlet of the heat exchanger 12a. The inflow temperature sensor 7a detects an inlet temperature Tain of the heat medium at the heat medium inlet of the heat exchanger 12a. An outflow temperature sensor 8a is disposed at the heat medium outlet of the heat exchanger 12a. The outflow temperature sensor 8a detects an outlet temperature Taout of the heat medium at the heat medium outlet of the heat exchanger 12a. The inflow pressure sensor 4a, the outflow pressure sensor 5a, the inflow temperature sensor 7a, and the outflow temperature sensor 8a output the detected values to a controller 50 disposed in the heat source unit 200. The room temperature sensor 6a outputs the detected value to the load-side controller 9a and the controller 50.

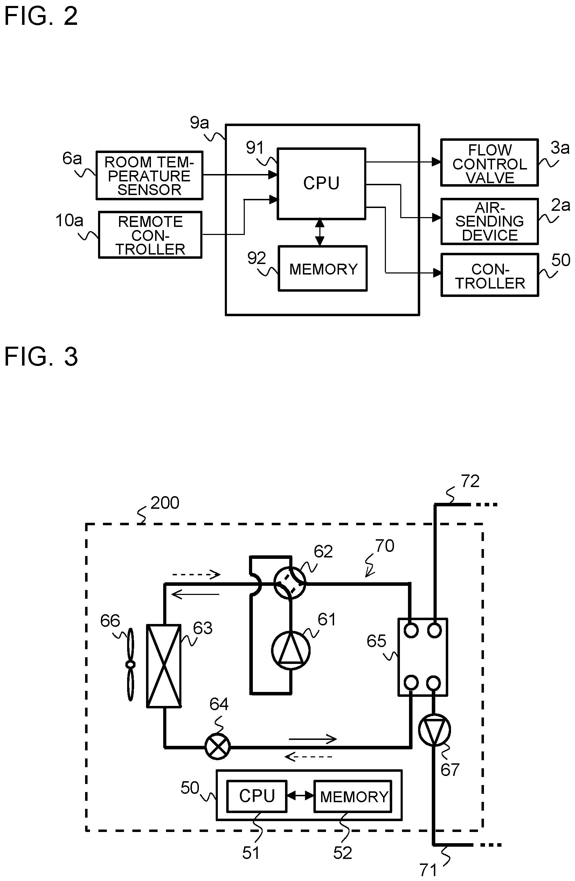

Fig. 2 illustrates an exemplary configuration of the load-side controller illustrated in Fig. 1. As illustrated in Fig. 2, the load-side controller 9a includes a memory 92 configured to store a program, and a central processing unit (CPU) 91 configured to execute processing in accordance with the program. The memory 92 is, for example, a non-volatile memory such as a flash memory. The load-side controller 9a controls the opening degree of the flow control valve 3a, on the basis of the temperature difference between a set temperature Tas input via the remote controller 10a and the room temperature Tar received from the room temperature sensor 6a. Further, the load-side controller 9a controls the rotation frequency of the air-sending device 2a, in accordance with the air volume that is set via the remote controller 10a. Opening degree setting information including a table and a formula for determining the opening degree of the flow control valve 3a on the basis of the temperature difference between the set temperature Tas and the room temperature Tar is stored in the memory 92. The opening degree setting information may be stored in the memory 92, for each of the heating and cooling operation modes.

The load-side controller 9a transmits information on the set temperature Tas and the operation mode set by the user to the controller 50. The load-side controller 9a transmits information on a valve opening degree Fcva of the flow control valve 3a to the controller 50. The load-side controller 9a may transmit the power consumption of a device, such as the air-sending device 2a, disposed in the load-side unit 100a to the controller 50. Fan power consumption information including a table and a formula for calculating the power consumption on the basis of the rotation frequency of the air-sending device 2a is stored in the memory 92.

In Fig. 1, the flow control valves 3a to 3c, the inflow pressure sensors 4a to 4c, and the outflow pressure sensors 5a to 5c are disposed at heat medium outlets of the heat exchangers 12a to 12c. However, the positions of these structures are not limited to those illustrated in Fig. 1. The flow control valves 3a to 3c, the inflow pressure sensors 4a to 4c, and the outflow pressure sensors 5a to 5c may be disposed at heat medium inlets of the heat exchangers 12a to 12c, or may be disposed outside the load-side units 100a to 100c.

The following describes the configuration of the heat source unit 200. Fig. 3 illustrates an exemplary configuration of the heat source unit illustrated in Fig. 1. As illustrated in Fig. 3, the heat source unit 200 includes a compressor 61, a flow switching device 62, a heat exchanger 63, an expansion device 64, a heat exchanger 65, an air-sending device 66, and the controller 50. The compressor 61, the heat exchanger 63, the expansion device 64, and the heat exchanger 65 are connected through a refrigerant pipe to form a refrigerant circuit 70 in which the refrigerant circulates. Also, the heat exchanger 65 and the heat exchanger 12a are connected through the connection pipes 71, 71a, 72a and 72 to form a heat medium circuit. The heat exchanger 65 and the heat exchanger 12b are connected through the connection pipes 71, 71b, 72b and 72 to form a heat medium circuit. The heat exchanger 65 and the heat exchanger 12c are connected through the connection pipes 71, 71c, 72c and 72 to form a heat medium circuit.

The compressor 61 compresses and discharges the refrigerant circulating in the refrigerant circuit 70. The compressor 61 is, for example, a compressor such as a rotary compressor, a scroll compressor, a screw compressor, and a reciprocating compressor. The flow switching device 62 is disposed to the discharge port of the compressor 61. The flow switching device 62 is, for example, a four-way valve. The heat exchanger 63 is a heat exchanger that exchanges heat between the refrigerant and the outdoor air. The heat exchanger 63 is, for example, a heat exchanger such as a fin-and-tube heat exchanger, a microchannel heat exchanger, and a plate heat exchanger. The heat exchanger 65 is a heat exchanger that exchanges heat between the refrigerant and the heat medium. If the heat medium is water, the heat exchanger 63 generates cold water and hot water. The heat exchanger 65 is, for example, a heat exchanger such as a shell-and-tube heat exchanger, a heat pipe heat exchanger, and a double pipe heat exchanger.

The expansion device 64 is, for example, an electronic expansion valve capable of controlling the flow rate of refrigerant. The air-sending device 66 supplies outdoor air to the heat exchanger 63. The air-sending device 66 is, for example, a fan such as a propeller fan and a turbo fan. The connection pipes 71 and 72 are connected to the heat exchanger 65. The connection pipe 71 is provided with a pump 67. The pump 67 is, for example, a circulating water pump. The pump 67 includes an impeller and a motor, and sends the heat medium flowing in from the heat exchanger 65 to the connection pipe 71 as the motor rotates the impeller.

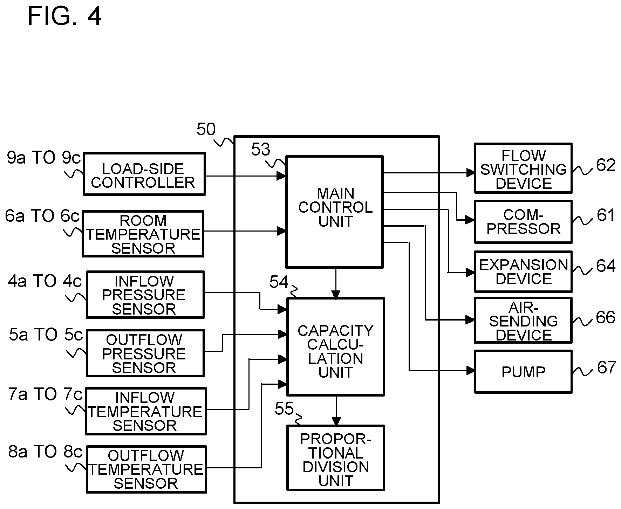

Fig. 4 is a functional block diagram illustrating an exemplary configuration of the controller illustrated in Fig. 3. As illustrated in Fig. 3, the controller 50 includes a memory 52 configured to store a program, and a CPU 51 configured to execute processing in accordance with the program. The memory 52 is, for example, a non-volatile memory such as a flash memory. As illustrated in Fig. 4, the controller 50 includes a main control unit 53 configured to control the operation of the air-conditioning apparatus 1, a capacity calculation unit 54 configured to calculate the usage capacity of each load-side unit, and a proportional division unit 55 configured to proportionally divide the power consumed by the heat source unit 200 among the load-side units. The main control unit 53, the capacity calculation unit 54, and the proportional division unit 55 illustrated in Fig. 4 are implemented when the CPU 51 executes the program stored in the memory 52.

The main control unit 53 receives the set temperatures Tas to Tcs from the load-side controllers 9a to 9c, and receives the room temperatures Tar to Tcr from the room temperature sensors 6a to 6c. The main control unit 53 calculates the required amount of heat, on the basis of the temperature difference between the set temperature Tas and the room temperature Tar, the temperature difference between the set temperature Tbs and the room temperature Tbr, and the temperature difference between the set temperature Tcs and the room temperature Tcr, in accordance with the operation modes specified from the load-side controllers 9a to 9c. Heat amount calculation information including a table and a formula for calculating the required amount of heat on the basis of the temperature difference between a set temperature and a room temperature is stored in the memory 52.

The main control unit 53 controls the flow switching device 62 in accordance with the specified operation mode. The main control unit 53 controls the rotation frequencies of the compressor 61, the air-sending device 66, and the pump 67, and the opening degree of the expansion device 64, on the basis of the calculated required amount of heat. Device setting information including tables and formulas for determining the rotation frequencies of the compressor 61, the air-sending device 66, and the pump 67, and the opening degree of the expansion device 64, on the basis of the required amount of heat is stored in the memory 52. The main control unit 53 also calculates the power consumption of the compressor 61, the air-sending device 66, the pump 67, and the expansion device 64. Power consumption calculation information including a table and a formula for calculating the power consumption on the basis of the rotation frequencies of the compressor 61, the air-sending device 66, and the pump 67, and the operation of the expansion device 64 is stored in the memory 52. The main control unit 53 transmits the calculated power consumption as a common power consumption Ysu to be shared by the plurality of load-side units 100a to 100c to the capacity calculation unit 54.

The capacity calculation unit 54 receives the inlet pressures Pain to Pcin from the inflow pressure sensors 4a to 4c. The capacity calculation unit 54 receives the outlet pressures Paout to Pcout from the outflow pressure sensors 5a to 5c. The capacity calculation unit 54 receives the inlet temperatures Tain to Tcin from the inflow temperature sensors 7a to 7c. The capacity calculation unit 54 receives the outlet temperatures Taout to Tcout from the outflow temperature sensors 8a to 8c. The capacity calculation unit 54 receives information on the valve opening degrees Fcva to Fcvc from the load-side controllers 9a to 9c.

The capacity calculation unit 54 calculates flow coefficients Cva to Cvc, on the basis of the valve opening degrees Fcva to Fcvc of the flow control valves 3a to 3c. Flow coefficient information including a table and a formula for calculating the flow coefficient Cv on the basis of the valve opening degree Fcv for each of the flow control valves 3a to 3c is stored in the memory 52. The capacity calculation unit 54 calculates the flow rate of the heat medium, on the basis of a pressure difference ΔP between the corresponding one of the inlet pressures Pain to Pcin and the corresponding one of the outlet pressures Paout to Pcout and the flow coefficient Cv of the corresponding one of the flow control valves 3a to 3c, for each of the plurality of load-side units 100a to 100c. A flow rate calculation for calculating the flow rate on the basis of the pressure difference ΔP and the flow coefficient Cv is stored in the memory 52.

Further, the capacity calculation unit 54 calculates the difference between the corresponding one of the inlet temperatures Tain to Tcin and the corresponding one of the outlet temperatures Taout to Tcout, as a temperature difference between the temperature of the heat medium that is to flow through the corresponding one of the heat exchangers 12a to 12c and the temperature of the heat medium that has flowed through the corresponding one of the heat exchangers 12a to 12c, for each of the plurality of load-side units 100a to 100c. The capacity calculation unit 54 calculates the usage capacity on the basis of the calculated flow rate and temperature difference, for each of the plurality of load-side units 100a to 100c. A capacity calculation formula for calculating the usage capacity on the basis of the flow rate and the temperature difference is stored in the memory 52. The capacity calculation unit 54 transmits the common power consumption Ysu received from the main control unit 53 to the proportional division unit 55. The proportional division unit 55 proportionally divides the common power consumption Ysu among the plurality of load-side units 100a to 100c, on the basis of the usage capacity of each load-side unit calculated by the capacity calculation unit 54.

In Embodiment 1, the controller 50 and the load-side controllers 9a to 9c are separate units. However, these controllers may be integrated into one unit. For example, the controller 50 may have the functions of the load-side controllers 9a to 9c. In this case, the controller 50 does not have to be located in the heat source unit 200. Further, in Figs. 1 and 3, a communication unit between the devices, a communication unit between the devices and the refrigerant device, and a communication unit between the devices and the sensors are not illustrated. The communication units may be wired, or may be wireless.

The following describes the operation of the air-conditioning apparatus 1. In the following description, the load-side units 100a to 100c operate in the same operation mode, and the heat medium is water. The users of the load-side units 100a to 100c operate the remote controllers 10a to 10c to input start-up instructions of the load-side units 100a to 100c, operation modes, set temperatures Tas to Tcs, and air volumes. The load-side controllers 9a to 9c transmit the set temperatures Tas to Tcs, the start-up instructions, and the operation modes input via the remote controllers 10a to 10c, to the controller 50. The start-up instruction and the operation mode may be transmitted to the controller 50 by any one of the load-side controllers.

Upon receiving the start-up instructions from the load-side controllers 9a to 9c, the main control unit 53 starts the pump 67. Upon receiving information on the operation modes from the load-side controllers 9a to 9c, the main control unit 53 controls the flow switching device 62 in accordance with the operation modes. Upon receiving the set temperatures Tas to Tcs from the load-side controllers 9a to 9c, the main control unit 53 collects the room temperatures Tar to Tcr from the room temperature sensors 6a to 6c, and calculates the amount of heat required by the plurality of load-side units 100a to 100c. Then, the main control unit 53 sets the rotation frequencies of the compressor 61, the air-sending device 66, and the pump 67, and the opening degree of the expansion device 64, on the basis of the calculated amount of heat, and then starts these devices.

The flow of the refrigerant in the refrigerant circuit 70 when the operation mode is cooling will be described with reference to Fig. 3. In Fig. 3, the flowing direction of the refrigerant in the refrigerant circuit 70 is indicated by the solid arrows.

The main control unit 53 switches the flow paths of the flow switching device 62 in such a manner that the refrigerant discharged from the compressor 61 flows into the heat exchanger 63. Low-temperature low-pressure refrigerant is compressed by the compressor 61, so that high-temperature high-pressure gaseous refrigerant is discharged from the compressor 61. The gaseous refrigerant discharged from the compressor 61 flows into the heat exchanger 63 via the flow switching device 62. The refrigerant that has flowed into the heat exchanger 63 is condensed by exchanging heat with air at the heat exchanger 63, and flows out of the heat exchanger 63 as low-temperature high-pressure liquid refrigerant.

The liquid refrigerant that has flowed out of the heat exchanger 63 is converted into low-temperature low-pressure liquid refrigerant by the expansion device 64. The liquid refrigerant flows into the heat exchanger 65. The refrigerant that has flowed into the heat exchanger 65 is evaporated by exchanging heat with water in the heat exchanger 65, and flows out of the heat exchanger 65 as low-temperature low-pressure gaseous refrigerant. In the heat exchanger 65, water flowing in from the connection pipe 72 is cooled as the refrigerant absorbs heat from the water. As a result, cold water is sent from the heat exchanger 65 to the plurality of load-side units 100a to 100c through the connection pipes 71 and 71a to 71c. The refrigerant that has flowed out of the heat exchanger 65 is suctioned into the compressor 61 via the flow switching device 62. While the operation mode is cooling, the cycle in which the refrigerant discharged from the compressor 61 flows sequentially through the heat exchanger 63, the expansion device 64, and the heat exchanger 65, and then is suctioned into the compressor 61 is repeated.

In the following, the flow of the refrigerant in the refrigerant circuit 70 when the operation mode is heating will be described with reference to Fig. 3. In Fig. 3, the flowing direction of the refrigerant in the refrigerant circuit 70 is indicated by the dashed arrows. The main control unit 53 switches the flow paths of the flow switching device 62 in such a manner that the refrigerant discharged from the compressor 61 flows into the heat exchanger 65.

Low-temperature low-pressure refrigerant is compressed by the compressor 61, so that high-temperature high-pressure gaseous refrigerant is discharged from the compressor 61. The high-temperature high-pressure gaseous refrigerant discharged from the compressor 61 flows into the heat exchanger 65 via the flow switching device 62. The refrigerant that has flowed into the heat exchanger 65 is condensed by exchanging heat with water in the heat exchanger 65, and flows out of the heat exchanger 65 as high-temperature high-pressure liquid refrigerant. In the heat exchanger 65, water flowing in from the connection pipe 72 is heated as the heat of the refrigerant is transferred to the water. As a result, hot water is sent from the heat exchanger 65 to the plurality of load-side units 100a to 100c through the connection pipes 71 and 71a to 71c.

The high-temperature high-pressure liquid refrigerant that has flowed out of the heat exchanger 65 is converted into low-temperature low-pressure liquid refrigerant by the expansion device 64. The liquid refrigerant flows into the heat exchanger 63. The refrigerant that has flowed into the heat exchanger 63 is evaporated by exchanging heat with air at the heat exchanger 63, and flows out of the heat exchanger 63 as low-temperature low-pressure gaseous refrigerant. The refrigerant that has flowed out of the heat exchanger 63 is suctioned into the compressor 61 via the flow switching device 62. While the operation mode is heating, the cycle in which the refrigerant discharged from the compressor 61 flows sequentially through the heat exchanger 65, the expansion device 64, and the heat exchanger 63, and then is suctioned into the compressor 61 is repeated.

The following describes the operation of the load-side units 100a to 100c. As the load-side units 100a to 100c operate in the same manner, only the operation of the load-side unit 100a will be described here. A heat medium sent by the pump 67 of the heat source unit 200 flows into the heat exchanger 12a through the connection pipes 71 and 71a. As will be described below, the heat medium exchanges heat with air when flowing through the heat exchanger 12a, and returns to the heat source unit 200 through the connection pipes 72a and 72.

The load-side controller 9a controls the rotation frequency of the air-sending device 2a, in accordance with the air volume that is set via the remote controller 10a. When the air-sending device 2a operates, the air 30 flows into the load-side unit 100a through the air inlet. The air 30 that has flowed into the load-side unit 100a exchanges heat with the heat medium supplied from the heat source unit 200, when passing through the heat exchanger 12a. The air 30 that has exchanged heat is blown into the room from the load-side unit 100a through the air outlet. When the heat medium is hot water, the air 30 is heated at the heat exchanger 12a, so that the air in the room is heated. When the heat medium is cold water, the air 30 is cooled at the heat exchanger 12a, so that the air in the room is cooled.

The load-side controller 9a controls the opening degree of the flow control valve 3a, on the basis of the temperature difference between the set temperature Tas input via the remote controller 10a and the room temperature Tar received from the room temperature sensor 6a. If the difference between the set temperature Tas and the room temperature Tar is more than a predetermined range, the load-side controller 9a increases the opening degree of the flow control valve 3a to increase the flow rate of the heat medium. On the other hand, if the difference between the set temperature Tas and the room temperature Tar is within the predetermined range, the load-side controller 9a reduces the opening degree of the flow control valve 3a to reduce the flow rate of the heat medium.

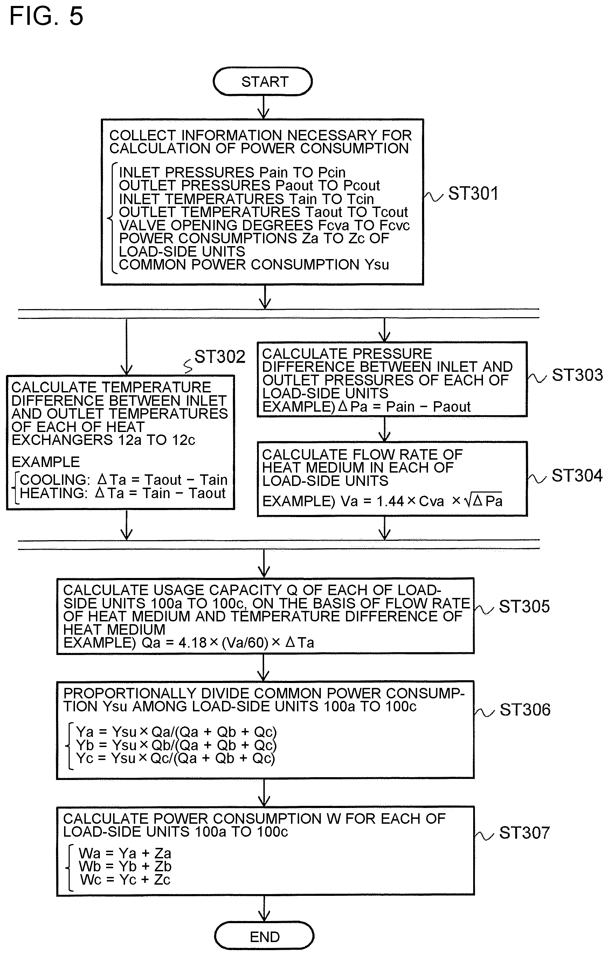

The following describes how the controller 50 calculates the power consumption of each of the plurality of load-side units 100a to 100c. Fig. 5 is a flowchart illustrating the procedure of power consumption calculation performed by the controller illustrated in Fig. 4.

The capacity calculation unit 54 collects information necessary for calculating the power consumption (step ST301). The information to be collected includes the values related to temperatures, including the inlet temperatures Tain to Tcin and the outlet temperatures Taout to Tcout of the heat mediums at the load-side units 100a to 100c. The information to be collected includes the values related to pressures, including the inlet pressures Pain to Pcin and the outlet pressures Paout to Pcout of the heat mediums at the flow control valves 3a to 3c. The main control unit 53 transmits the common power consumption Ysu [kW] as the power consumption of the heat source unit 200 to the capacity calculation unit 54. The load-side controllers 9a to 9c transmit the valve opening degrees Fcva to Fcvc of the flow control valves 3a to 3c to the capacity calculation unit 54.

The load-side controller 9a may transmit the power consumption of a device such as the air-sending device 2a to the proportional division unit 55, as a power consumption Za [kW] specific to the load-side unit 100a. Likewise, the load-side controller 9b may transmit a power consumption Zb [kW] specific to the load-side unit 100b to the proportional division unit 55, and the load-side controller 9c may transmit a power consumption Zc [kW] specific to the load-side unit 100c to the proportional division unit 55.

Then, the capacity calculation unit 54 calculates a temperature difference ΔT between the temperature of the heat medium at the inlet of each of the load-side units 100a to 100c and the temperature of the heat medium at the outlet of the load-side unit, for each load-side unit (step ST302). For example, in the case of the load-side unit 100a, a temperature difference ΔTa during the cooling operation is calculated by the formula ΔTa = Taout - Tain, and a temperature difference ΔTa during heating operation is calculated by the formula ΔTa = Tain - Taout. Similarly, in the case of the load-side unit 100b, a temperature difference ΔTb is calculated by the formula ΔTb = |Tbin - Tbout|. In the case of the load-side unit 100c, a temperature difference ΔTc is calculated by the formula ΔTc = |Tbin - Tbout|.

In addition, the capacity calculation unit 54 calculates the pressure difference ΔP of the heat medium flowing through each of the load-side units 100a to 100c (step ST303). For example, in the case of the load-side unit 100a, the capacity calculation unit 54 calculates a pressure difference ΔPa between the pressure of the heat medium at an inlet of the load-side unit 100a and the pressure of the heat medium at an outlet of the load-side unit 100a, using the formula ΔPa = Pain - Paout. Similarly, the capacity calculation unit 54 calculates a pressure difference ΔPb between the pressure of the heat medium at an inlet of the load-side unit 100b and the pressure of the heat medium at an outlet of the load-side unit 100b, using the formula ΔPb = Pbin - Pbout. The capacity calculation unit 54 calculates a pressure difference ΔPc between the pressure of the heat medium at an inlet of the load-side unit 100c and the pressure of the heat medium at an outlet of the load-side unit 100c, using the formula ΔPc = Pcin - Pcout.

Then, the capacity calculation unit 54 calculates a flow rate V [L/min] of the heat medium in each of the load-side units 100a to 100c, using the formula V = 1.44 × Cv × (ΔP)^{1/2} (step ST304). For example, in the case of the load-side unit 100a, the capacity calculation unit 54 calculates a flow rate Va of the heat medium, using the formula Va = 1.44 × Cva × (ΔPa)^{1/2}. Similarly, the capacity calculation unit 54 calculates a flow rate Vb of the heat medium in the load-side unit 100b, using the formula Vb = 1.44 × Cvb × (ΔPb)^{1/2}. The capacity calculation unit 54 calculates a flow rate Vc of the heat medium in the load-side unit 100c, using the formula Vc = 1.44 × Cvc × (ΔPc)^{1/2}.

Then, the capacity calculation unit 54 calculates a usage capacity Q [kW] of each of the load-side units 100a to 100c, using the formula Q = 4.18 × (V/60) × ΔT (step ST305). In this formula, the denominator 60 in the right expression is for providing the right expression and the left expression in the same unit of measurement. The denominator 60 may be omitted depending on the unit of measurement of a parameter. In the case of the load-side unit 100a, the capacity calculation unit 54 calculates a usage capacity Qa, using the formula Qa = 4.18 × (Va/60) × ΔTa. Similarly, the capacity calculation unit 54 calculates a usage capacity Qb of the load-side unit 100b, using the formula Qb = 4.18 × (Vb/60) × ΔTb. The capacity calculation unit 54 calculates a usage capacity Qc of the load-side unit 100c, using the formula Qc = 4.18 × (Vc/60) × ΔTc.

The temperature range of the heat medium may be divided into a plurality of temperature ranges, and a plurality of types of flow rate calculation formulas and a plurality of types of capacity calculation formulas may be stored in the memory 52 for the respective temperature ranges. The capacity calculation unit 54 uses a flow rate calculation formula and a capacity calculation formula suitable for the temperature of the heat medium in steps ST304 and ST305 illustrated in Fig. 5. In this case, although the density and specific heat of the heat medium vary with the temperature, the calculated flow rate and usage capacity are corrected in accordance with the temperature, which improves the calculation accuracy.

Then, the proportional division unit 55 divides the common power consumption Ysu in proportion to the usage capacities Qa to Qc of the load-side units 100a to 100c (step ST306). The powers obtained by proportionally dividing the common power consumption Ysu among the load-side units 100a to 100c are referred to as divided common powers Ya to Yc. In the case of the load-side unit 100a, the proportional division unit 55 calculates the divided common power Ya, using the formula Ya = Ysu × Qa/(Qa + Qb + Qc). Similarly, the proportional division unit 55 calculates the divided common power Yb of the load-side unit 100b, using the formula Yb = Ysu × Qb/(Qa + Qb + Qc). The proportional division unit 55 calculates the divided common power Yc of the load-side unit 100c, using the formula Yc = Ysu × Qc/(Qa + Qb + Qc).

Further, in the case of calculating a power consumption Wa of the load-side unit 100a out of an entire power consumption WA of the air-conditioning apparatus 1, the proportional division unit 55 adds the power consumption Za of the load-side unit 100a to the divided common power Ya calculated in step ST306 (step ST307). Similarly, in the case of calculating a power consumption Wb of the load-side unit 100b out of the entire power consumption WA, the proportional division unit 55 adds the power consumption Zb to the divided common power Yb. In the case of calculating a power consumption Wc of the load-side unit 100c out of the entire power consumption WA, the proportional division unit 55 adds the power consumption Zc to the divided common power Yc.

The proportional division unit 55 calculates the amounts of power consumed by the load-side units 100a to 100c by integrating the power consumptions Wa to Wc of the load-side units 100a to 100c by the elapsed time. The proportional division unit 55 stores the history of the power consumptions Wa to Wc and the amounts of power consumed in time series in the memory 52. The capacity calculation unit 54 repeats processing of steps ST301 to ST305 at regular intervals, thereby updating the usage capacities Qa to Qc. Every time the usage capacities Qa to Qc received from the capacity calculation unit 54 are updated, the proportional division unit 55 applies the updated usage capacities Qa to Qc to the power consumptions Wa to Wc of the load-side units 100a to 100c.

The entire power consumption WA of the air-conditioning apparatus 1 is expressed by Wa + Wb + Wc. The amount of power consumed by the air-conditioning apparatus 1 can be calculated on the basis of the history of the amounts of power consumed by the load-side units 100a to 100c. The administrator of the air-conditioning apparatus 1 can calculate the electricity expense allocated to the users of the load-side units, from the electricity expense charged by the power company, on the basis of the history of the amount of power consumed by the air-conditioning apparatus 1 and the power consumptions Wa to Wc.

In Embodiment 1, the three load-side units 100a to 100c are connected to the air-conditioning apparatus 1. However, two or four or more load-side units may be connected. By applying Embodiment 1 to a plurality of load-side units, it is possible to calculate a proportionally-divided amount of power consumption for each load-side unit. Further, if the flow coefficients Cva to Cvc are not dependent on the valve opening degrees Fcva to Fcvc of the flow control valves 3a to 3c, the flow coefficients Cva to Cvc may be constants that are set for the respective flow control valves 3a to 3c.

The air-conditioning apparatus 1 of Embodiment 1 calculates the usage capacity, on the basis of the flow rate V calculated on the basis of the pressures at the inlet and the outlet of the flow control valve of each load-side unit and the temperature difference ΔT of the heat medium, and proportionally divides the common power consumption among the plurality of load-side units, on the basis of the calculated usage capacity.

According to Embodiment 1, the flow rate in each load-side unit is calculated on the basis of the pressure difference between the pressure of the heat medium at the inlet of the flow control valve and the pressure of the heat medium at the outlet of the flow control valve. Therefore, even when the connection pipes connecting the heat source unit 200 and the plurality of load-side units 100a to 100c have different lengths from each other, the flow rate of the heat medium flowing through each load-side unit can be accurately calculated. For example, in the case where the plurality of load-side units 100a to 100c are installed on different floors of the same building, the difference in length between the pipes connecting the heat source unit 200 and the load-side units is significant. Even in this case, the flow rate of the heat medium flowing through each load-side unit can be accurately calculated. This makes it possible to more accurately proportionally divide the common power consumption Ysu consumed by the heat source unit 200 on the basis of the usage capacity of each load-side unit. As a result, the administrator of the air-conditioning apparatus 1 can charge the user of each load-side unit for the electricity expense corresponding to the amount of power consumed.

Indoor units of a variable refrigerant flow system for a building are often installed in indoor spaces where people are present, such as office spaces, living rooms and stores. In the case where the amount of refrigerant filled in the refrigerant pipe is large, the oxygen concentration in the indoor space decreases if the refrigerant leaks in the indoor space. Regarding this problem, as the air-conditioning apparatus 1 of Embodiment 1 is of a double loop system having a refrigerant circuit and a heat medium circuit, it is possible to prevent leakage of refrigerant into the indoor space.

Further, in Embodiment 1, the capacity calculation unit 54 may calculate the flow rate, on the basis of the pressure difference ΔP between the pressure of the heat medium at the inlet of the flow control valve and the pressure of the heat medium at the outlet of the flow control valve and the flow coefficient Cv, and calculate the difference between the inlet temperature and the outlet temperature of the heat medium at the load-side unit as the temperature difference ΔT. As the temperature difference that is used as an index of the amount of heat used in each of the load-side units 100a to 100c is calculated for each load-side unit, the accuracy of calculating the usage capacity Q of each load-side unit is improved.

Further, when calculating the flow rate of the heat medium, the capacity calculation unit 54 may use a constant flow coefficient for the flow control valves 3a to 3c, or may use the flow coefficients Cva to Cvc corresponding to the valve opening degrees Fcva to Fcvc of the flow control valves 3a to 3c. In the case of using the flow coefficients corresponding to the valve opening degrees Fcva to Fcvc of the flow control valves 3a to 3c, the accuracy of calculating the flow rate is further improved. In the case of using a constant flow coefficient for the flow control valves 3a to 3c, the load of the arithmetic processing for flow rate calculation by the capacity calculation unit 54 is reduced.

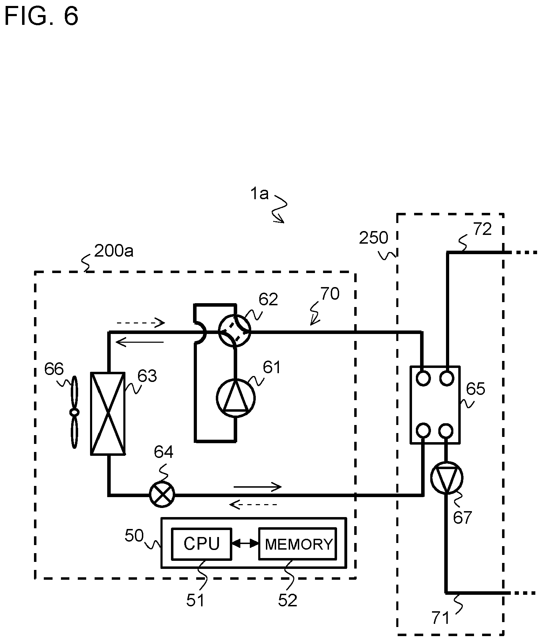

The air-conditioning apparatus 1 of Embodiment 1 may include a relay unit between the heat source unit 200 and the plurality of load-side units 100a to 100c. Fig. 6 illustrates another exemplary configuration of an air-conditioning apparatus according to Embodiment 1 of the present disclosure. In Fig. 6, the load-side units 100a to 100c are not illustrated.

An air-conditioning apparatus 1a illustrated in Fig. 6 includes a heat source unit 200a, the plurality of load-side units 100a to 100c illustrated in Fig. 1, and a relay unit 250 configured to cause a heat medium to flow through the plurality of load-side units 100a to 100c. The heat exchanger 65 and the pump 67 illustrated in Fig. 3 are disposed in the relay unit 250 instead of being disposed in the heat source unit 200a. In the air-conditioning apparatus 1a illustrated in Fig. 6, a heat medium that has exchanged heat in the heat exchanger 65 with refrigerant circulating in the refrigerant circuit 70 circulates between the relay unit 250 and the plurality of load-side units 100a to 100c. Therefore, even when the connection pipes connecting the relay unit 250 and the plurality of load-side units 100a to 100c have different lengths from each other, the flow rate of the heat medium flowing through each load-side unit can be accurately calculated.

### Reference Signs List

1, 1a air-conditioning apparatus 2a to 2c air-sending device 3a to 3c flow control valve 4a to 4c inflow pressure sensor 5a to 5c outflow pressure sensor 6a to 6c room temperature sensor 7a to 7c inflow temperature sensor 8a to 8c outflow temperature sensor 9a to 9c load-side controller 10a to 10c remote controller 12a to 12c heat exchanger 30 air 50 controller 51 CPU 52 memory 53 main control unit 54 capacity calculation unit 55 proportional division unit 61 compressor 62 flow switching device 63 heat exchanger 64 expansion device 65 heat exchanger 66 air-sending device 67 pump 70 refrigerant circuit 71, 71a to 71c connection pipe 72, 72a to 72c connection pipe 91 CPU 92 memory 100a to 100c load-side unit 200, 200a heat source unit 250 relay unit

## Claims

1. An air-conditioning apparatus, comprising:
a heat source unit configured to generate heat to be transferred by a heat medium;
a plurality of load-side units through which the heat medium flows; and
a controller configured to proportionally divide a common power consumption consumed by the heat source unit,
each of the plurality of load-side units including
a flow control valve configured to control a flow rate of the heat medium,
an inflow pressure sensor disposed to an inlet port of the flow control valve, and configured to detect an inlet pressure of the heat medium, and
an outflow pressure sensor disposed to an outlet port of the flow control valve, and configured to detect an outlet pressure of the heat medium,
the controller including
a capacity calculation unit configured to calculate a usage capacity for each of the plurality of load-side units, on a basis of a flow rate of the heat medium and a temperature difference of the heat medium, the flow rate of the heat medium being calculated on a basis of a pressure difference between the inlet pressure detected by the inflow pressure sensor and the outlet pressure detected by the outflow pressure sensor, and
a proportional division unit configured to proportionally divide the common power consumption among the plurality of load-side units, on a basis of the usage capacity of each of the plurality of load-side units calculated by the capacity calculation unit.

2. The air-conditioning apparatus of claim 1,
wherein each of the plurality of load-side units further includes
an inflow temperature sensor configured to detect an inlet temperature of the heat medium at an inlet of the load-side unit, and
an outflow temperature sensor configured to detect an outlet temperature of the heat medium at an outlet of the load-side unit, and
wherein the capacity calculation unit is configured to calculate, for each of the plurality of load-side units, the flow rate on a basis of the pressure difference and a flow coefficient of the flow control valve, and calculate a difference between the inlet temperature detected by the inflow temperature sensor and the outlet temperature detected by the outflow temperature sensor as the temperature difference.

3. The air-conditioning apparatus of claim 2,
wherein the capacity calculation unit is configured to use the flow coefficient corresponding to a valve opening degree of the flow control valve.

4. The air-conditioning apparatus of any one of claims 1 to 3, further comprising
a relay unit disposed between the heat source unit and the plurality of load-side units, and configured to cause the heat medium to flow through the plurality of load-side units.
